# EUROPEAN PATENT APPLICATION

(11) **EP 1 251 199 A1**
(43) Date of publication of application: **23.10.2002**
(21) Application number: 01500286.8
(22) Date of filing: 17.12.2001
(51) Int. Cl.: D04H 1/48, B32B 5/06

(54) **Needlepunched und thermal bonded nonwoven fabric, process and use**

(30) Priority: 19.04.2001 ES 200100908
(71) Applicant: Magna Emfisint Automotive S.A., 08227 Terrassa (Barcelona) (ES)
(72) Inventor: Permanyer Roca, Xavier, 08222-Terrassa (Barcelona) (ES); Romero Dias, Jorge Elias, 08222-Terrassa (Barcelona) (ES)
(74) Representative: Curell Aguilà, Marcelino

(57) **Abstract**

A textile sheet material and process and corresponding use are disclosed. The textile sheet material comprises a layer of needle punched textile material having two fibre types (7, 9), with different melting points, having at least one physical property with different values, in such a way that these different values allow at least partial lamination of the fibre types (7, 9). The process comprises the following steps: [a] blending the types of fibres (7, 9); [b] carding the blend of fibres until a sheet is obtained; [c] lamination; [d] heating of the hidden face (5) of the sheet; and [e] forming the sheet. The preferred uses are for the production of automobile components such as floor carpets, trunk carpets and wheel arch carpets.

## Description

### Field of the Invention

The invention relates to a textile sheet material of the type comprising at least one layer of needle punched textile material. The invention has also for object a process for the production of a textile sheet material and some preferred uses of a textile sheet material.

### State of the Art

Textile sheet materials are known that comprise a layer of needle punched textile material. For example they are frequently used in the automotive sector, as coverings for diverse parts of the interior of an automobile. These coverings have a springy, carpet type, surface finish. They are generally manufactured from a blend of fibres which are spread out to form a sheet and which are later joined together by applying an adhesive system, usually an acrylic resin, to one of the sides of the sheet. The side on which no adhesive is applied is the visible side. So that the visible side may have a more pleasing appearance and feel, a needle punching step is usually introduced in the productive process, before the adhesive is applied. In this step, needles are inserted that position the fibres in a spongier or more spaced apart way, so that a softer and springy finish is achieved. This needle punching process is known, and there are several variations thereof, such as, for example "VELOUR", "DILOUR", etc. Subsequently, one or more additional layers can be added to the layer of needle punched textile material, on the hidden side, that fulfil other functions, such as structural reinforcement, acoustic and/or thermal insulation, etc. It is also possible subsequently to form the sheet, so that it is better adapted to the part of the vehicle that it is wanted to cover.

However, the known textile sheet materials on the market have drawbacks. A very important drawback is related with the conservation of the environment. As has already been said above, in the conventional processes the fibres that form the layer of textile material are joined together by means of the addition of an acrylic resin (generally added in form of a foam on the hidden side) or by addition of an SBR (latex) type adhesive product. However these adhesives are complex and expensive to use for environmental reasons, and the recycling is also more complex. On the other hand, when additional layers are added to the textile sheet material, these must be adhered to the layer of needle punched textile material. It is also desirable to facilitate this adhesive attachment. In any case, the automotive sector is highly competitive, and the costs are always extremely important, whereby it is desirable that any proposed improvement be accompanied by a reduction of costs or, at least, should not have a negative repercussion on the costs.

### Summary of the Invention

The invention has for object to overcome these drawbacks. This aim is attained by means of a textile sheet material of the type mentioned at the beginning characterized in that the layer of textile material comprises at least a first fibre type and a second fibre type, with different melting points, where both (or more) fibre types have at least one physical property with different values, in such a way that these different physical property values allow at least partial lamination of said fibre types.

Indeed, the sheet material layer has two clearly differentiated surfaces. On one hand, the visible surface, which is the one that should possess the properties of comfort of a carpet and, on the other hand, the hidden surface, which is where another sheet material layer is usually attached. Starting out from a homogeneous blend, when a certain degree of lamination of one of the fibres is obtained, a different behaviour is achieved between both faces of the sheet material layer. In the present invention, one of the types of fibres (hereinafter called the first type of fibres) has a lower melting point than the second type of fibres. Appropriate heating can melt the first type of fibres, which acts as adhesive so that the ensemble is united appropriately. However, if no lamination has taken place, the visible surface of the layer of textile material will also be with the first type of fused fibres and with the second type of fibres stuck together, whereby the properties of comfort, such as the softness and the padded or springy feel, are lost. However, thanks to the lamination, the first type of fibres concentrates on the hidden surface and the concentration thereof is reduced on the visible surface. Thus, local heating can be applied to the hidden surface of the layer of textile material, which allows the adhesive attachment to occur basically in the vicinity of the hidden surface, and the visible surface to be provided with good properties of comfort.

The lamination should not be understood in an absolute sense, but in a relative sense, that is to say, like a loss of the initial homogeneity. When the first fibre type is segregated from the second fibre type there occurs an increase in the concentration of the first type of fibres relative to the second type of fibres in the hidden surface (and in the immediate proximity thereof) of the layer of textile material. There occurs simultaneously an impoverishment or reduction of concentration of the first type of fibres relative to the second type of fibres in the visible surface (and in the immediate proximity thereof) of the layer of textile material. The segregation is not complete and the lamination should not be interpreted as the existence of two clearly differentiated sub-layers, one containing all the first fibre type and the other one completely devoid of the first fibre type, but rather it is necessary to understand the lamination as a more or less continuous gradient of concentrations.

The lamination can be obtained by any appropriate means, in general, by taking advantage of a different value of an appropriate physical property. Preferably the physical property is the dtex. The dtex is an internationally established value that defines the thickness of a fibre. There is a wide range of fibres on the market and a wide range dtex for each of them, whereby is a parameter that allows a wide range of manoeuvre. It is particularly interesting that the first fibre type has a dtex between 9 tex and 20 tex, and that the second fibre type has a dtex between 3 tex and 15 tex.

A preferred embodiment of the invention is obtained when the first fibre type is a polyolefin, such as for example polythene or polypropylene that have low melting points. The use of polythene is particularly interesting.

Preferably the melting point of the first fibre type is below 170°C, Such as for example when polypropylene is used, or below 135°C, such as for example when polythene is used, and advantageously the content of the first fibre type is between 5% and 20wt%.

On the other hand, it is advantageous that the melting point of the second type of fibres is above 160°C. Thus, polyester is preferred as a second fibre type, although polypropylene can also be used.

It is particularly interesting that the first fibre type should be responsible for fixation of the fibres composing the layer of textile material. It is thus possible completely to eliminate the need to add acrylic resins or latex. When necessary, a certain additional amount of polythene can be added to the hidden layer, to improve the adherence between the fibres, and to improve the adherence to a possible additional layer.

The invention has also for object a process for the production of a textile sheet material according to the invention, characterized in that it comprises the following steps: [a] blending both or more types of fibres; [b] carding the blend of fibres until a sheet is obtained; [c] at least partial lamination of the sheet by means of at least partial segregation of the types of fibres; [d] heating the hidden surface of the sheet; and [e] forming the sheet. The carding step is usually followed by a first needle punching that facilitates the formation of the sheet. This first needle punching does not "pull out" the fibres and, therefore, it does not establish a difference between the visible surface and the hidden surface of the sheet. Therefore, this first needle punching should not be confused with needle punching of the "DILOUR" or "VELOUR" type that do displace fibres outwardly, "pulling them out" through one of the surfaces (the one that will be the visible surface).

Preferably the segregation takes place simultaneously with a needle punching operation. The layer of textile material usually requires a needle punching operation to achieve an appropriate aspect. This needle punching operation is usually carried out by means of needles that cross the layer of textile material, from the hidden surface to the visible surface. The needles are provided at the tips thereof with holes in which fibres having a dtex lower than or equal to a given value can lodge and which are thus displaced with the movement of the needles. The fibres having a dtex of higher value are not displaced substantially by the needles. Thus the segregation of both types of fibres is forced, the laminated structure being attained. As it can be appreciated, in this case the first fibre type should have a greater dtex than the second fibre type, so that the needle punching needles, for example "DILOUR" type, do not drag it towards the visible surface.

The material is preferably heated to a temperature above the melting point of the first fibre type, and is applied locally, on the hidden surface, by means of infrared radiation. Melting of the first type of fibres bonds the remaining types of fibres, but only in an area adjacent the hidden surface, whereby the quality of the visible surface is preserved.

The material is likewise preferably heated to a temperature below the melting point of the second fibre type.

Finally the invention relates to uses of textile sheet materials according to the invention for the production of automobile components, preferably for the production of floor carpets, trunk carpets and wheel arch carpets, without need to use any type of resin.

### Brief Description of the Drawings

Further advantages and features of the invention will be appreciated from the following description, wherein, without any limitative nature, a preferred embodiment of the invention is disclosed, with reference to the accompanying drawings, in which:

Figure 1 shows a layer of conventional textile material, before the needle punching step.

Figure 2 shows the layer of textile material of Figure 1 after the needle punching step.

Figure 3 shows the layer of textile material of Figure 2 after a step of applying an adhesive acrylic resin.

Figure 4 shows a layer of textile material according to the invention, before the needle punching step.

Figure 5 shows the layer of textile material of Figure 4, after the needle punching step.

Figure 6 shows the layer of textile material of Figure 5, after the heating step.

### Detailed Description of the Invention

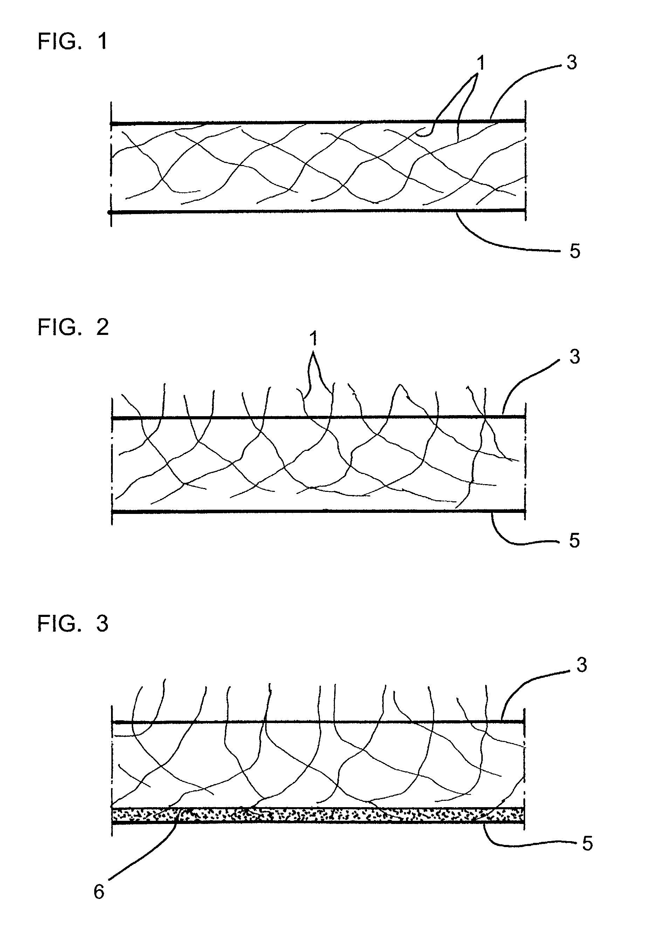

Figures 1 to 3 schematically show a conventional process of production of a textile sheet material, to be precise of the layer of textile material. The textile material may have only one type of textile fibres 1, or it can be a homogeneous blend of various textile fibres. In Figures 1 to 3 the fibres 1 have been shown to be all the same, for greater simplicity of Figures. Figure 1 corresponds substantially to the arrangement of the fibres 1 after the carding and first needle punching steps that do not displace the fibres outside the visible surface. The upper surface 3 of the layer of textile material is the visible surface, while the lower surface 5 is the hidden surface. After the needle punching step, for example "DILOUR" type, the fibres 1 have an appearance similar to the one shown in Figure 2, being particularly spongy on the visible surface 3. After this needle punching step the fibres 1 are very weakly bonded to each other, so that they have to be joined or bonded to each other in some additional way. This additional bond is achieved by means of the contribution of an SBR or acrylic resin foam that is added on the hidden surface 5 and that forms a sub-layer or adhesive area 6 which usually does not show a clearly defined border.

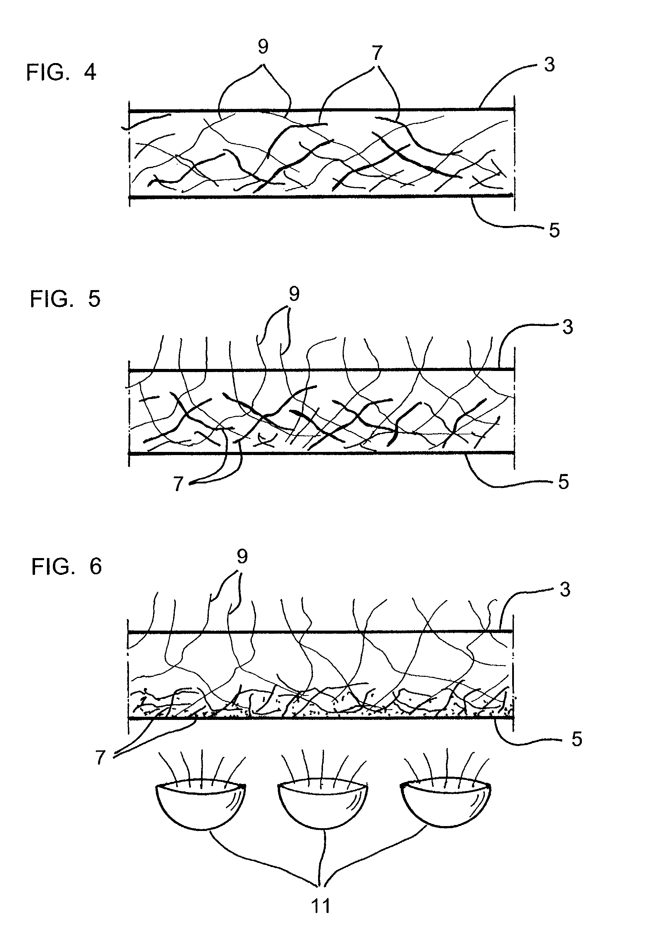

In the textile sheet material according to the invention as shown in Figures 4 to 6, the sheet material layer is composed of at least two types of different fibres. In Figures 4 to 6 a first type of fibres 7 has been shown by filaments drawn with thicker lines and a second type of fibres 9 by filaments drawn with thinner lines. Before the needle punching step, the two types of fibres 7 and 9 are more or less homogeneously distributed inside the layer of textile material, as shown in Figure 4. However, after the needle punching step, for example "DILOUR" type, the second type of fibres 9 has been dragged partially up, towards the visible surface 3, in such a way that the first type of fibres 7 has been concentrated in the lower part, closer to the hidden surface 5 (see Figure 5). In the heating step (Figure 6) a temperature is reached in the hidden surface 5 and in the vicinity thereof that causes the first type of fibres 7, i.e. the one having the lower melting point, to melt. The heat is applied locally, by means of heat sources, for example infrared rays 11. The molten material bonds the remaining fibres strongly to each other. However, in the visible surface 3, owing to the almost complete absence of fibres of the first type 7 and owing to a lower temperature, there is no molten material and, therefore, the visible surface retains the soft, padded appearance.

There are described two examples of embodiments of a textile sheet material according to the invention.

### Example 1:

### Materials employed:

- polythene fibre, having a melting point of approximately 107°C, dtex: 17 tex, fibre length: 60 mm, amount 10wt%
- polyester fibre, having a melting point above 210°C, heat-setting point above 160°C, dtex: 11 tex, fibre length: 60 mm, amount 90wt%

### Production process:

- carding and first needle punching
- needle punched with "DILOUR" needles, with a penetration of 12 mm
- addition of a 100 g/m² layer of powdered polythene on the hidden surface
- heating by means of infrared rays up to approximately 200°C
- bonding of the hidden surface with a conventional needle punched felt that comprises a blend of various fibres, previously heated and pressed at 210°C
- cold forming of the layer of textile material and the felt together, to obtain the textile sheet material. Form temperature: 12°C.

### Results:

Both the abrasion resistance and the heat stability of the textile sheet material obtained are similar to those obtained with conventional textile sheet materials.

### Example 2:

### Materials employed:

- polythene fibre, having a melting point of approximately 125°C, dtex: 17 tex, fibre length: 60 mm, amount 10wt%
- polyester fibre, having a melting point above 210°C, heat-setting point above 160°C, dtex: 11 tex, fibre length: 60 mm, amount 90wt%

### Manufacturing process:

- carding and first needle punching
- needle punched with "DILOUR" needles, with a penetration of 12 mm
- addition of a 100 g/m² layer of powdered polythene on the hidden surface
- heating by means of infrared rays up to approximately 200°C
- bonding of the hidden surface with a conventional needle punched felt that comprises a blend of various fibres, previously heated and pressed at 210°C
- cold forming of the layer of textile material and the felt together, to obtain the textile sheet material. Form temperature: 12°C.

### Results:

Both the abrasion resistance and the heat stability of the textile sheet material obtained are similar to those obtained with conventional textile sheet materials.

In both cases, the bond between the sheet material layer and the felt has been of the same quality that a bond between a layer of conventional textile material and a conventional felt. However, in the examples according to the invention it has sufficed to provide an additional layer of powdered polythene, while in a conventional bond it is necessary, furthermore, to apply a polyester copolymer, to reach a sufficiently strong bond.

## Claims

1. A textile sheet material of the type comprising at least one layer of needle punched textile material, **characterized in that** said layer of textile material comprises at least a first fibre type (7) and a second fibre type (9), with different melting points, where said fibre types (7, 9) have at least one physical property with different values, in such a way that said different physical property values allow at least partial lamination of said fibre types (7, 9).

2. The textile sheet material according to claim 1, **characterized in that** said physical property is the dtex.

3. The textile sheet material according to claim 1 or claim 2, **characterized in that** said first fibre type (7) has a dtex between 9 tex and 20 tex, and said second fibre type (9) has a dtex between 3 tex and 15 tex.

4. The textile sheet material according to at least one of claims 1 to 3, **characterized in that** said first fibre type (7) is a polyolefin, preferably polythene.

5. The textile sheet material according to at least one of claims 1 to 4, **characterized in that** said second fibre type (9) is polyester or polypropylene.

6. The textile sheet material according to at least one of claims 1 to 5, **characterized in that** said first fibre type (7) is present in an amount ranging from 5% to 20wt%.

7. The textile sheet material according to at least one of claims 1 to 6, said first fibre type (7) having a lower melting point than said second fibre type (9), **characterized in that** said first fibre type (7) is responsible for the fixation of the fibres that composing said layer of textile material.

8. The textile sheet material according to at least one of claims 1 to 7, **characterized in that** said first fibre type (7) has a melting point below 170°C.

9. The textile sheet material according to at least one of claims 1 to 8, **characterized in that** said second type of fibres (9) has a melting point above 160°C.

10. A process for the production of a textile sheet material according to at least one of claims 1 to 9, **characterized in that** it comprises the following steps: [a] blending of said types of fibres (7, 9); [b] carding the blend of fibres until a sheet is obtained; [c] at least partial lamination of said sheet by means of at least partial segregation of said types of fibres (7, 9); [d] heating the hidden surface (5) of said sheet; and [e] forming said sheet.

11. The process according to claim 10, **characterized in that** said segregation takes place simultaneously with a needle punching operation.

12. The process according to claim 10 or claim 11, **characterized in that** said heating is continued to a temperature above the melting point of said first fibre type (7).

13. The process according to at least one of claims 10 to 12, **characterized in that** said heating is continued to a temperature below the melting point of said second fibre type (9).

14. The use of a textile sheet material according to at least one of claims 1 to 9, for the production of automobile components.

15. The use according to claim 14, **characterized in that** said components are of the group formed by floor carpets, trunk carpets and wheel arch carpets.
